# EUROPEAN PATENT APPLICATION

(11) **EP 1 942 590 A1**
(43) Date of publication of application: **09.07.2008**
(21) Application number: 07290013.7
(22) Date of filing: 03.01.2007
(51) Int. Cl.: H04B 10/148, H04B 10/18

(54) **Coherent optical receiver and method of compensating polarisation distortion effects in optical signals**

(71) Applicant: Alcatel Lucent, 75008 Paris (FR)
(72) Inventor: Bülow, Henning, 70806 Kronwestheim (DE)
(74) Representative: Kohler Schmid Möbus

(57) **Abstract**

A coherent receiver (1) for optical signals (OS) comprises: means (4) for mixing a received optical signal (OS) with a local oscillator signal (RS) to produce at least one beat frequency signal; means (7.1-7.4) for generating real part and imaginary part electrical signals (I_{S}, O_{S}, I_{P}, Qₚ) from said beat frequency signal; means (9.1-9.4) for converting said electrical signals to a digital format; and means (10) for performing digital signal processing of said digitised electrical signals. In the proposed coherent receiver (1) said digital signal processing means (10) comprise first means (10.1) adapted to perform a filtering function on said digitised electrical signals in real time and second means (10.2) adapted to perform a signal evaluation on a set of signal samples (B1-B4) from said first means to derive at least one adaptation parameter (Tᵢ, Cᵢⱼ) for said filtering function. In this way, fast feed-forward adaptation for the mitigation of polarisation effects in a coherent receiver is achieved without the need for slow feedback (dithering).

## Description

### Background of the invention

The present invention relates to a coherent receiver, comprising: means for mixing a received optical signal with a local oscillator signal to produce at least one beat frequency signal; means for generating real part and imaginary part electrical signals from said beat frequency signal; means for converting said electrical signals to a digital format; and means for performing digital signal processing of said digitised electrical signals.

Furthermore, the present invention relates to a method of compensating polarisation distortion effects in optical signals, comprising: mixing a received optical signal with a local oscillator signal to produce at least one beat frequency signal; generating real part and imaginary part electrical signals from said beat frequency signal; converting said electrical signals to a digital format; and performing digital signal processing of said digitised electrical signals.

Coherence detection as described, e.g., in a recent publication by Tsukamoto et al., "Unrepeated 20-Gbit/s QPSK Transmission over 200-km Standard Single-Mode Fibre using Homodyne Detection and Digital Signal Processing for Dispersion Compensation", Optical Society of America (2006), is currently being discussed for optical receivers operating at high bit rates of, e.g., 10 and 40 Gbit/s. Such receivers, also referred to as coherent receivers, offer the potential of low penalty compensation of optical distortion (e.g., chromatic dispersion, intra-channel fibre non-linearity, polarisation effects, etc.). This is due to the fact that coherent receivers perform a transformation of the complete optical field information (including phase and polarisation information) into the electrical domain.

However, up to now no architecture or method has been disclosed for compensating polarisation effects such as Polarisation Mode Dispersion (PMD) or Polarisation-Dependent Loss (PDL) by using coherent receivers. The above-cited publication by Tsukamoto et al., too, only provides a solution for compensating chromatic dispersion effects.

### Object of the invention

It is the object underlying the present invention to provide a coherent receiver and a method of the above-defined type, respectively, which enable compensation of polarisation induced distortion in the context of coherent detection.

In accordance with the present invention, the problem is solved by providing a coherent receiver of the above-defined type, in which said digital signal processing means comprise first means adapted to perform a filtering function on said digitised electrical signals in real time and second means adapted to perform a signal evaluation on a set of signal samples from said first means to derive at least one adaptation parameter for said filtering function.

In connection with a method of the above-defined type the object is solved by the steps of: performing a filtering function on said digitised electrical signals in real time using a first means, and in parallel to said filtering function, performing a signal evaluation on a set of signal samples from said first means to derive at least one adaptation parameter for said filtering function using a second means.

Coherent detection makes use of a (heterodyne) receiver, which produces a beat frequency in the MHz range from a received optical signal through mixing with a fixed frequency local oscillator signal (e.g., a laser signal) that is in the range of an optical frequency of the input signal (i.e., about 200 THz). The beat signal is then represented in the electrical domain as a complex signal with real part and imaginary part, which are sampled and digitised separately. Since the beat signal carries all information of the original optical signal, it can in principle be processed digitally without loss using a digital signal processor (DSP).

In order to address the above-mentioned object, especially at high data rates of, e.g., 40 Gbit/s, a dual DSP-scheme is proposed: In accordance with an embodiment of the present invention, a fast DSP performs a filtering function, such as a lattice filter, on the data in real time, while a slower control processor performs a Discrete Fast Fourier Transformation (DFFT) on a - preferably limited - sequence of signal samples to derive filter parameters for the filtering function of the fast DSP.

According to a further embodiment of the present invention, a polarisation splitter produces two orthogonal polarisation modes of an optical input signal, which are fed to a mixer of the coherent receiver, which can be devised as a heterodyne receiver, as already mentioned above. An output of the polarisation splitter is analysed for real part and complex part signals, respectively, and the resulting four signals are sampled and digitised (A/D converted) separately. A fast DSP performs said filtering function on the complex samples. A set of signal samples (e.g., 16 - 1024 bits) are forwarded to the control processor, which derives optimum settings for the fast DSP from polarisation spectra obtained by said DFFT of the distorted signal. Hence, said control processor serves to adapt processing of the actual polarisation distortion by means of said fast DSP.

In this way, the proposed coherent receiver and the proposed method are especially suited for optical backbone systems, submarine systems and metro systems.

Preferred embodiments of the present invention are mentioned in the subclaims, the wording of which is herewith included in the present description by reference in order to avoid unnecessary text repetitions.

Further advantages and characteristics of the present invention can be gathered from the following description of preferred embodiments given by way of example only with reference to the enclosed drawings. Features mentioned above as well as below can be used in accordance with the present invention either individually or in conjunction. The following description is not to be regarded as an exhaustive enumeration but rather as examples with respect to a general concept underlying the present invention.

### Brief description of the drawings

- Fig. 1: is a schematic block diagram of an embodiment of the coherent receiver in accordance with the present invention;
- Fig. 2: is a schematic diagram of a lattice filter structure used within the receiver of Fig. 1; and
- Fig. 3: is a schematic diagram of a delay means used within the filter structure of Fig. 2.

### Detailed description

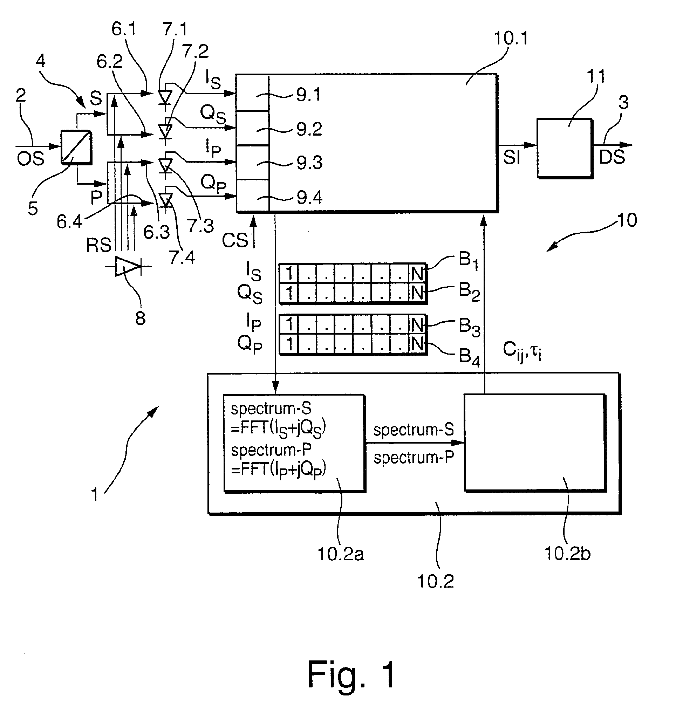

**Fig. 1** shows a schematic block diagram of an embodiment of the coherent receiver in accordance with the present invention. The coherent receiver **1** comprises an input **2** for inputting an optical signal **OS** and an output **3** for outputting a data signal **DS** based on said input optical signal OS. An optical hybrid **4** comprising a Polarisation Beam Splitter **5** is connected with said input 2 of coherent receiver 1. Optical hybrid 4 comprises four output ports **6.1-6.4** which are operatively connected with respective optical-to-electrical converting means **7.1-7.4** which may take the form of diodes. Furthermore, upstream of said output ports 6.1-6.4 respective signal paths within optical hybrid 4 are operatively connected with a local oscillator laser (LO) **8.**

An electrical signal output of respective optical-to-electrical converting means 7.1-7.4 is provided to respective analog-to-digital converting means (ADCs) **9.1-9.4.** ADCs 9.1-9.4 further receive a clock signal **CS** of the coherent receiver 1.

Downstream said ADCs 9.1-9.4 the coherent receiver 1 in accordance with the present invention comprises digital signal processing (DSP) means **10,** which are subdivided into first means **10.1** for fast digital signal processing, i.e., fast digital signal processing means, and second means **10.2** in the form of an adaptation control processor for controlling an operation of said first means 10.1. Second means 10.2 further comprise Fourier transformer **10.2a** and numerical calculating means **10.2b.**

An output signal **SI** of DSP means 10 is provided to a decision unit **11** which provides said data signal DS to output 3 of the coherent receiver 1.

Operation of the coherent receiver 1 as depicted in Fig. 1, which can be devised either as a homodyne or as a heterodyne receiver, they will now be described in some detail with reference to appended Fig. 1.

An optical signal OS input at 2 is split into two orthogonal polarisation states **S, P.** said polarisation states S, P of optical signal OS are further split up by performing vectorial additions with a reference signal **RS** provided by the LO 8. This standard operation of optical hybrid 4 is assumed to be known to a person skilled in the art. The resulting optical signals (not shown) are provided to output ports 6.1-6.4 of optical hybrid 4. They interact with optical-to-electrical converting means in the form of photo diodes 7.1-7.4, respectively, which produce electrical signals **Is, Q_{S}, I_{P}, Q_{P}** associated with respective optical signals output from optical hybrid **4.**

In this way, optical hybrid 4 can also be referred to as "optical mixer" which, in conjunction with the respective photo diode 7.1-7.4, multiplies the received optical signal OS and the reference signal RS generates by LO 8 to provide said optical signals at output port 6.1-6.4 for generating said electrical signals I_{S}, Q_{S}, I_{P}, Q_{P}. The electrical signals I_{S}, Q_{S}, I_{P}, Q_{P} include real part electrical signals and imaginary part electrical signals, i.e., electrical signals I_{S}, I_{P} and electrical signals Q_{S}, Q_{P}, respectively. Owing to the interaction between the optical signals within optical hybrid 4 and reference signal RS provided by LO 8 the signals provided at output port 6.1-6.4 of optical hybrid 4 are also referred to as beat frequency signals.

The electrical signals Is, Q_{S}, I_{P}, Q_{P} are provided to ADCs 9.1-9.4 for analog-to-digital conversion in synchronisation with clock signal CS.

As known to a person skilled in the art, the digitised electrical signals provided to the DSP 10 from ADCs 9.1-9.4 contain the complete information of the optical field associated with received optical signal OS, including phase and polarisation information. First means 10.1 of DSP 10 then perform filtering of said digitised electrical signals essentially in real time in order to mitigate effects of polarisation distortion and provide a filtered signal as output signal SI to decision unit 11. Decision unit 11 decides on respective (binary) states of individual bits within output signal SI and outputs a result of said decision as data signal DS via output 3.

In order to optimise performance of first digital signal processing means 10.1, blocks **B1-B4** of signal samples of said digitised electrical signals corresponding to said electrical signals Is, Q_{S}, I_{P}, Q_{P} are provided to adaptation control processor 10.2 from said first digital signal processing means 10.1. Note that in the above description, reference signs Is, Q_{S}, I_{P}, Q_{P} have been used to designate both the electrical signals prior to analog-to-digital conversion by means of ADCs 9.1-9.4 and the resulting digitised electrical signals output from said ADCs 9.1-9.4. Each of said blocks B1-B4 comprises a number of N consecutive signal samples from respective digitised electrical signals Is, Q_{S}, I_{P}, and Q_{P}, respectively. In this way, said blocks or sets B1-B4 of signal samples provided to second digital signal processing means 10.2 are delimited in bit number with respect to a number of bits comprised in the received optical signal. In other words, for a given time interval the number N of signal samples comprised in blocks B1-B4 is smaller than a number of bits N' (not shown) output by respective ADCs 9.1-9.4. While first digital signal processing means 10.1 operate on the entire information provided by received optical signal OS, the adaptation control processor or the second digital signal processing means 10.2 only operate on a limited set of information provided by received optical signal OS. In this way, the first digital signal processing means 10.1 can also be referred to as fast digital signal processing means whereas the second digital signal processing means 10.2 can also be referred to as slow digital signal processing means. The first and second digital signal processing means 10.1 and 10.2 can either be implemented in form of the single chip architecture or can be comprised on separate chips.

Using the signal samples comprised within blocks B1-B4, the adaptation control processor or second digital signal processing means 10.2 perform a Fourier transformation, in particular a Fast Fourier Transformation (FFT). In this way, the second digital signal processing means 10.2 are adapted to derive a number of polarisation spectra of the received optical signal. As can be gathered from Fig. 1, Fourier transformer 10.2a comprised within said second means 10.2 derives a first polarisation spectrum ("spectrum-S") from a signal I_{S}+jQ_{S} and a second polarisation spectrum ("spectrum-P") from a signal I_{P}+jQ_{P}. Both of said signals are formed from the signal samples comprised within blocks B1-B4. Said spectra are then provided to numerical calculating means 10.2b which operate on the derived spectra to generate and/or adapt operation parameters of the first digital signal processing means 10.1 for optimising a performance characteristic of the latter. In accordance with embodiments of the present invention said performance characteristic can either be a minimum bit error ratio (BER) or a maximum eye opening or a maximum quality of signal (i.e., output signal SI), or other parameters derived from the processed signal samples and which are strongly correlated to an improved signal quality, as known to a person skilled in the art. In the illustration of Fig. 1, said numerical calculating means 10.2b provide respective adaptation parameters or signal processor settings to said first digital signal processing means 10.1, said adaptation parameters being denoted C_{i,j}, Ti, ...

In this way, as illustrated in Fig. 1, the polarisation spectra of a distorted (optical) input signal are used to determine optimum settings of the fast digital signal processing part 10.1 and thus to compensate the actual polarisation distortion by way of a feed-forward adaptation. As previously described, the polarisation spectra are obtained by transferring a limited time span of consecutive signal samples (ranging, e.g., from 16 to 1024 or 2048 bits) to adaptation control processor 10.2, which can be located externally with respect to said fast digital signal processing means 10.1. Said adaptation control processor 10.2 numerically performs a discrete Fast Fourier Transformation (DFFT). The parameters or settings of the fast signal processing means 10.1 are calculated to approach an inverse polarisation transfer function in order to compensate polarisation distortion.

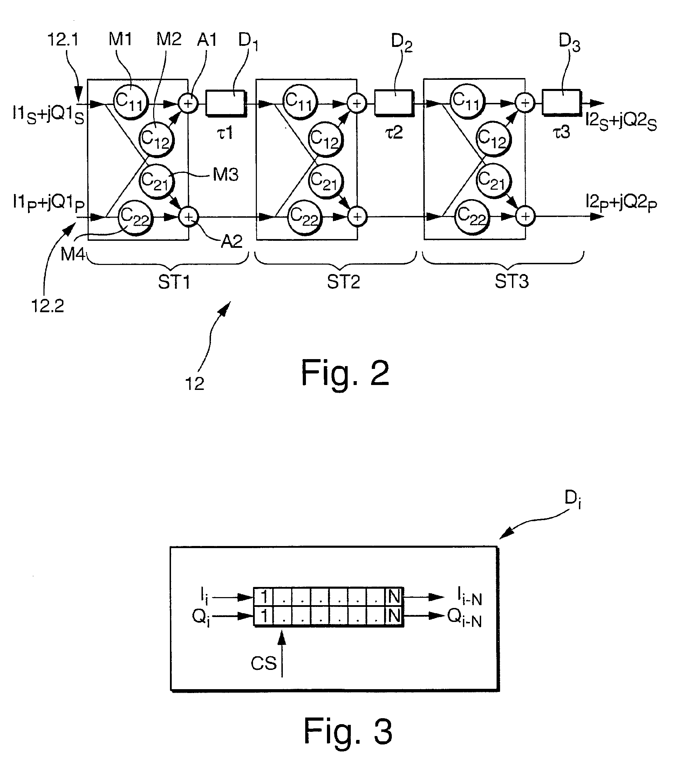

For said fast digital signal processing means 10.1 the present invention proposes numerical operations which follow the calculation rules of a lattice filter structure. In accordance with an embodiment of the present invention, said lattice filter structure, as illustrated in Fig. 2, may be comprised within the fast digital signal processing part 10.1 in Fig. 1.

**Fig. 2** shows a schematic diagram of a lattice filter structure used within the receiver of Fig. 1. The lattice filter structure **12** of Fig. 2 comprises two signal paths **12.1, 12.2** which receive complex input signals I1_{S}+ jQ1_{S} and I1_{P}+jQ1_{P}, respectively. The lattice filter structure 12 comprises a number of stages **ST1, ST2, ST3** each including respective multiplying means **M1-M4,** adding or combining means **A1, A2** and delay means **Di (D1, D2, D3).** While said multiplying means M1-M4 and said adding means A1, A2 are identical for each of said stages ST1-ST3, said delay means D1-D3 may differ between stages with respect to their delay time τ1, τ2, τ3. Adding means A1, A2 serve to combine signal contributions on said first and second signal paths 12.1, 12.2 after respective multiplication by means of multiplying means M1, M2 and M3, M4, respectively. Multiplying means M1-M4 multiply an input signal with a coefficient Cᵢⱼ, which can be either real or complex valued. As can further be gathered from the illustration in Fig. 2, said coefficients Cᵢⱼ form a 2 x 2 rotation matrix. The delay means D1-D3 are located in said first signal path 12.1 only and delay an input signal by a respective delay time τ1-τ3 downstream of adding or combining means A1. Respective output signals I2_{S}+jQ2_{S}, I2_{P}+jQ2_{P} on said first and second signal paths 12.1, 12.2, respectively are then used to form said output signal SI of digital signal processing means 10 (Fig. 1).

Delay means D1-D3 can have fixed or tuneable time delays τ1-τ3. According to an embodiment of the present invention, delay means D1-D3 are implemented in the form of shift registers, as depicted schematically in Fig. 3.

**Fig. 3** shows a schematic diagram of a delay means used within the filter structure of Fig. 2. In Fig. 3, a delay means generally denoted Di has a first input for a signal Iᵢ and a second input for the signal Qᵢ. Furthermore, delay means Di has a first output for a signal I_{i-N} at a second output for a signal Q_{i-N}. Signal input and output of delay means Di is controlled in synchronisation with clock signal CS. In this way, if one bit of an input signal is input into the shift register a corresponding (older) bit is output from the shift register, as known to a person skilled in the art. In this way, for an N-bit shift register a bit i-N is output when inputting a bit i. In accordance with the value of N and a frequency of clock signal CS this amounts to a time delay τ(N).

Alternatively, in another embodiment of the coherent receiver in accordance with the present invention the delay means Di; D1-D3 can also be implemented in the form of digital FIR filters.

Instead of the lattice filter structure 12 depicted in Fig. 2, an alternative embodiment of the coherent receiver in accordance with the present invention may use a transversal filter (having a butterfly structure) for fast digital signal processing. However, as will be appreciated by a person skilled in the art, any other DSP filter capable of filtering digitised electrical signals with high data rates in a reliable fashion to overcome polarisation distortion effects may be used for implementing the first digital signal processing means 10.1 of Fig. 1.

The signal samples comprised in blocks B1-B4 may be output from said first digital signal processing means 10.1 immediately downstream of ADCs 9.1-9.4. However, as will be appreciated by a person skilled in the art, optionally some signal (pre-)preprocessing may be performed prior to providing the signal samples of blocks B1-B4 from said first digital signal processing means 10.1 to said second digital signal processing means 10.2.

In this way, the present invention achieves fast feed-forward adaptation for the mitigation of polarisation effects in a coherent receiver without the need for slow feedback (dithering).

## Claims

1. A coherent receiver (1) for optical signals, comprising:
- means (4) for mixing a received optical signal (OS) with a local oscillator signal (RS) to produce at least one beat frequency signal;
- means (7.1-7.4) for generating real part and imaginary part electrical signals (I_{S}, Q_{S}, I_{P}, Q_{P}) from said beat frequency signal;
- means (9.1-9.4) for converting said electrical signals to a digital format;
- means (10) for performing digital signal processing of said digitised electrical signals;
**characterised in that**
said digital signal processing means comprise first means (10.1) adapted to perform a filtering function on said digitised electrical signals in real time and second means (10.2) adapted to perform a signal evaluation on a set of signal samples (B1-B4) from said first means to derive at least one adaptation parameter (Tᵢ, Cᵢⱼ) for said filtering function.

2. The receiver (1) of claim 1, **characterised in that** said first means (10.1) are adapted to provide a number of N consecutive samples of the digitised electrical signals to said second means (10.2).

3. The receiver (1) of claim 1, **characterised in that** said set of signal samples (B1-B4) is limited in bit number (N) with respect to a number of bits comprised in the received optical signal (OS).

4. The receiver (1) of claim 1, **characterised by** polarisation splitting means (5) located upstream of said mixing means (4) for producing a plurality of distinct polarisation modes (S, P) of the received optical signal (OS).

5. The receiver (1) of claim 1, **characterised in that** said second means (10.2) are adapted to derive at least one polarisation spectrum of the received optical signal (OS).

6. The receiver (1) of claim 5, **characterised in that** said second means (10.2) are adapted to derive said adaptation parameter (Tᵢ, Cᵢⱼ) from said at least one spectrum.

7. The receiver (1) of claim 1, **characterised in that** said first means (10.1) comprise a lattice filter structure (12).

8. The receiver (1) of claim 7, **characterised in that** said lattice filter structure (12) comprises a number of stages (ST1-ST3), each of said stages including:
- means (M1-M4) for multiplying input signals (I1ₛ+jO1ₛ, I1ₚ₊jQ1ₚ) of the lattice filter structure with respective filtering coefficients (Cᵢⱼ; C₁₁, C₁₂, C₂₁, C₂₂);
- means (A1, A2) for combining said input signals after said multiplication;
- means (Di; D1-D3) for delaying at least part of the combined input signals by a given delay time (Tᵢ; T1, T2, T3) to generate output signals (I2_{S}+jO2_{S}, I2_{P}+jQ2_{P}) of the lattice filter structure.

9. The receiver (1) of claim 7, **characterised in that** said lattice filter structure (12) is adapted to receive complex input signals (I1_{S}+jO1_{S}, I1_{P}+jQ1_{P}) formed from said digitised electrical signals output from said converting means (9.1-9.4) and to produce complex output signals (I2_{S}+jO2_{S}, I2_{P}+jQ2_{P}).

10. The receiver (1) of claim 7, **characterised in that** filtering coefficients (Cᵢⱼ) and/or delay times (Tᵢ) of the lattice filter structure (12) are adaptable by means of said at least one adaptation parameter.

11. A method of compensating polarisation distortion effects in optical signals, comprising:
- mixing a received optical signal (OS) with a local oscillator signal (RS) to produce at least one beat frequency signal;
- generating real part and imaginary part electrical signals (I_{S}, Q_{S}, I_{P}, Q_{P}) from said beat frequency signal;
- converting said electrical signals to a digital format;
- performing digital signal processing of said digitised electrical signals;
**characterised by** the steps of:
- performing a filtering function on said digitised electrical signals in real time using a first means (10.1), and
- in parallel to said filtering function, performing a signal evaluation on a set of signal samples (B1-B4) from said first means to derive at least one adaptation parameter for said filtering function using a second means (10.2).
